# FASCICULE DE BREVET EUROPEEN

(11) **EP 3 109 507 B1**
(45) Date de publication et mention de la délivrance du brevet: **10.04.2019**
(21) Numéro de dépôt: 16174816.5
(22) Date de dépôt: 16.06.2016
(51) Int. Cl.: F16F 15/131

(54) **DOUBLE VOLANT AMORTISSEUR EQUIPE D'UN DISPOSITIF TEMPORAIRE D'IMMOBILISATION**
GEDÄMPFTES DOPPELLENKRAD, DAS MIT EINER VORRICHTUNG ZUR VORÜBERGEHENDEN IMMOBILISIERUNG AUSGESTATTET IST
DOUBLE SHOCK-ABSORBING FLYWHEEL PROVIDED WITH A TEMPORARY IMMOBILISATION DEVICE

(30) Priorité: 23.06.2015 FR 1555735
(43) Date de publication de la demande: 28.12.2016
(73) Titulaire: Valeo Embrayages, 80009 Amiens Cedex 2 (FR)
(72) Inventeur: LANFRANCO, Gianbattista, 10046 POIRINO (TO) (IT); LAPORTE, Benjamin, 12084 Mondovi (IT)
(74) Mandataire: Cardon, Nicolas

(56) Documents cités:
- DE-A1- 4 211 840
- DE-A1-102013 215 582
- GB-A- 2 276 433

## Description

### Domaine technique

L'invention se rapporte au domaine des transmissions pour véhicule automobile et concerne plus particulièrement un double volant amortisseur.

### Arrière-plan technologique

Les moteurs à explosions ne génèrent pas un couple constant et présentent des acyclismes provoquées par les explosions se succédant dans leurs cylindres. Ces acyclismes génèrent des vibrations qui sont susceptibles de se transmettre à la boîte de vitesses et d'engendrer ainsi des chocs, bruits et nuisances sonores, particulièrement indésirables.

Afin de diminuer les effets indésirables des vibrations et améliorer le confort de conduite des véhicules automobiles, certaines transmissions de véhicule automobile sont équipées d'un double volant amortisseur. Un double volant amortisseur comporte un volant d'inertie primaire destiné à être fixé en bout d'un vilebrequin, un volant d'inertie secondaire, coaxial au volant primaire, et formant le plateau de réaction d'un dispositif embrayage et des organes élastiques interposés entre le volant primaire et le volant secondaire pour transmettre un couple et amortir les acyclismes de rotation entre le volant primaire et le volant secondaire. Le volant secondaire comporte des plots et/ou des orifices servant au montage du couvercle du dispositif d'embrayage.

Pour faciliter l'assemblage de la transmission, il est connu des moyens permettant d'immobiliser temporairement le volant secondaire dans une position angulaire déterminée par rapport au volant primaire. De tels moyens d'immobilisation permettent notamment d'assurer un positionnement relatif précis du volant secondaire et du couvercle du mécanisme d'embrayage lors de l'étape de fixation du couvercle de l'embrayage sur le volant secondaire.

La demande de brevet FR2817601, qui est considéré l'état de la technique le plus proche, divulgue des moyens temporaires d'immobilisation constitués soit par un matériau adhésif reliant le volant primaire au volant secondaire, soit par des goupilles sécables en plastique comportant chacune une partie insérée dans un orifice ménagé dans le volant primaire et une partie insérée dans un orifice ménagé dans le volant secondaire. Le matériau adhésif et les goupilles sécables sont agencés de telle sorte que, d'une part, ils maintiennent le volant primaire et le volant secondaire dans une position angulaire déterminée pendant toute la durée des opérations de montage mais que, d'autre part, ils se rompent lors du premier démarrage du moteur. Toutefois, de tels moyens d'immobilisation ne sont pas pleinement satisfaisants. En effet, le matériau adhésif comme les goupilles sécables sont de nature à occasionner des débris ou pollutions susceptibles de contrarier le fonctionnement normal de l'embrayage ou d'un capteur, tel qu'un capteur de vitesse moteur, disposé à l'intérieur de la cloche d'embrayage. En outre, les goupilles sécables sont relativement fastidieuses à mettre en place tandis que le matériau adhésif nécessite une opération de séchage qui rallonge d'autant la durée des opérations d'assemblage du double volant amortisseur.

### Résumé

Une idée à la base de l'invention est de proposer un double volant amortisseur comportant un dispositif temporaire d'immobilisation du volant secondaire par rapport au volant primaire qui soit fiable et simple.

Selon un mode de réalisation, l'invention fournit un double volant amortisseur pour véhicule automobile comportant :
- un volant primaire et un volant secondaire mobiles en rotation l'un par rapport à l'autre autour d'un axe X ;
- des organes élastiques interposés entre le volant primaire et le volant secondaire et aptes à transmettre un couple et amortir les acyclismes de rotation entre le volant primaire et le volant secondaire ; et
- un dispositif temporaire d'immobilisation apte à immobiliser le volant secondaire par rapport au volant primaire dans une position angulaire déterminée ;
le dispositif temporaire d'immobilisation comportant une languette élastique, solidaire en rotation de l'un des volants primaire et secondaire, et une patte de verrouillage, solidaire en rotation de l'autre des volants primaire et secondaire, la languette élastique étant, dans ladite position angulaire déterminée, apte à prendre une position accrochée dans laquelle elle coopère avec la patte de verrouillage ; la languette élastique étant, dans ladite position accrochée, contrainte contre la patte de verrouillage de manière à exercer un effort de retenue s'opposant à la rotation du volant secondaire par rapport au volant primaire ; la languette élastique étant ainsi apte à être rappelée de sa position accrochée à une position décrochée dans laquelle la languette élastique est placée à distance de la patte de verrouillage et autorise la rotation du volant secondaire par rapport au volant primaire, lorsqu'un couple transmis entre le volant primaire et le volant secondaire est suffisant pour vaincre l'effort de retenue exercé par la languette élastique sur la patte de verrouillage.

Ainsi, un tel dispositif d'immobilisation temporaire est fiable et simple à fabriquer et à installer dans le double volant amortisseur de telle sorte que la fonction d'immobilisation temporaire des volants l'un par rapport à l'autre n'a que peu de conséquences sur le coût et la durée de fabrication du double volant amortisseur.

En outre, le dispositif d'immobilisation temporaire n'occasionne pas de débris ou pollutions susceptibles de contrarier le fonctionnement normal de l'embrayage.

Selon d'autres modes de réalisation avantageux, un tel double volant amortisseur peut présenter une ou plusieurs des caractéristiques suivantes :
- Selon un mode de réalisation, la languette élastique est solidaire en rotation du volant secondaire et la patte de verrouillage est solidaire en rotation du volant primaire.
- La languette élastique et la patte de verrouillage s'allongent respectivement radialement vers l'intérieur et radialement vers l'extérieur ou inversement.
- Le dispositif temporaire d'immobilisation comporte une pluralité de languettes élastiques et une pluralité de pattes de verrouillages. Les languettes élastiques et les pattes de verrouillage sont régulièrement réparties autour de l'axe X. Selon une variante particulière, le dispositif temporaire d'immobilisation comporte deux languettes élastiques et deux pattes de verrouillage diamétralement opposés.
- Dans sa position décrochée, la languette élastique ne se trouve pas sur la trajectoire de la patte de verrouillage.
- La patte de verrouillage présente une encoche apte à recevoir ladite languette élastique dans sa position accrochée, ladite encoche étant bordée de part et d'autre selon la direction circonférentielle par des congés.
- La languette élastique est formée dans une rondelle de tôle ou dans un morceau de tôle. La tôle est par exemple formée d'un acier à ressort, tel qu'un acier au carbone, trempé et revenu de type C67.
- La rondelle de tôle ou le morceau de tôle comporte une échancrure présentant un fond et la languette élastique comporte une extrémité libre apte à coopérer avec la patte de verrouillage dans sa position accrochée et une extrémité proximale reliée au fond de l'échancrure. Une telle structure permet de réaliser des languettes élastiques de longueur conséquente afin de leur conférer l'élasticité souhaitée tout en limitant l'encombrement radial de la rondelle ou du morceau de tôle.
- Le volant primaire est agencé pour former une chambre annulaire interne dans laquelle sont logés les organes élastiques, lesdits organes élastiques étant interposés circonférentiellement entre des butées portées par le volant primaire et des pattes d'appui radiales s'étendant à l'intérieur de ladite chambre annulaire et formées dans un voile annulaire fixé au volant secondaire.
- Selon un mode de réalisation, la languette élastique et le voile sont fixés au volant secondaire par des organes de fixation communs, ce qui permet de faciliter les opérations d'assemblage. Les organes de fixation sont, par exemple, des rivets.
- La chambre annulaire est remplie de lubrifiant, la languette élastique étant formée dans une rondelle d'étanchéité qui est fixée sur le voile et comporte un bord externe plaqué contre le volant primaire afin de contribuer à l'étanchéité de la chambre annulaire. Un tel mode de réalisation permet de limiter le nombre de composants du double volant amortisseur.
- La patte de verrouillage est formée dans une rondelle fixée au volant primaire et la patte de verrouillage fait saillie radialement vers l'extérieur.
- Le volant primaire comporte une pluralité d'orifices aptes à permettre le passage de vis destinés à la fixation du volant primaire à un vilebrequin d'un moteur à combustion, le double volant amortisseur comportant en outre une rondelle d'appui destinée à l'appui des têtes desdites vis, la rondelle d'appui comportant une pluralité d'orifices de passage desdites vis et la patte de verrouillage est formée dans ladite rondelle d'appui et fait saillie radialement vers l'extérieur. Dans ce cas, la ou chaque languette élastique est solidaire en rotation du volant secondaire et s'allonge de son extrémité proximale à son extrémité distale radialement vers l'intérieur.
- Le double volant amortisseur comporte un dispositif de frottement agencé pour exercer un couple résistant de frottement lors de la rotation relative entre les volants primaire et secondaire, ledit dispositif de frottement comportant une première rondelle de frottement comportant une surface de frottement en contact avec le volant primaire, ladite première rondelle de frottement étant apte à être entraînée en rotation par rapport au volant primaire lors de la rotation relative du volant secondaire et une rondelle élastique apte à exercer une charge axiale sur ladite rondelle de frottement de manière à appuyer la rondelle de frottement contre le volant primaire, ladite rondelle élastique étant en appui axial contre un rebord de la rondelle d'appui. En d'autres termes, la rondelle d'appui forme un couvercle pour un dispositif de frottement.
- Le dispositif de frottement comporte en outre une seconde rondelle de frottement interposée entre la rondelle élastique et la première rondelle de frottement, ladite seconde rondelle de frottement comportant une ou plusieurs pattes qui sont chacune engagées dans une ouverture ménagée dans la rondelle d'appui de sorte à solidariser en rotation la seconde rondelle de frottement à ladite rondelle d'appui.
- Le volant primaire est agencé pour former une chambre annulaire interne dans laquelle sont logés les organes élastiques, ladite chambre annulaire étant limitée axialement par un couvercle annulaire, la patte de verrouillage étant formée dans ledit couvercle annulaire et faisant saillie radialement vers l'intérieur.
- La languette élastique est solidaire du volant secondaire et le volant primaire comporte un orifice faisant face à ladite languette élastique et apte à permettre l'introduction d'un outil permettant de pousser la languette élastique dans une direction opposée à sa position décrochée de manière à éloigner la languette élastique de la patte de verrouillage.

Selon un mode de réalisation, l'invention fournit également une chaîne de transmission de véhicule automobile ou un véhicule automobile comportant un double volant amortisseur équipé d'un tel double volant amortisseur.

### Brève description des figures

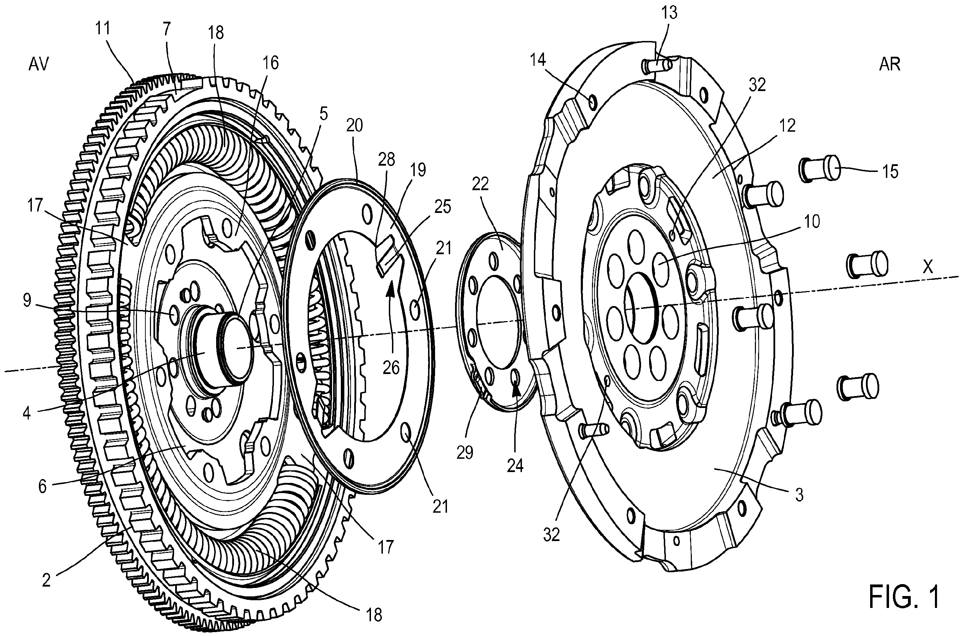

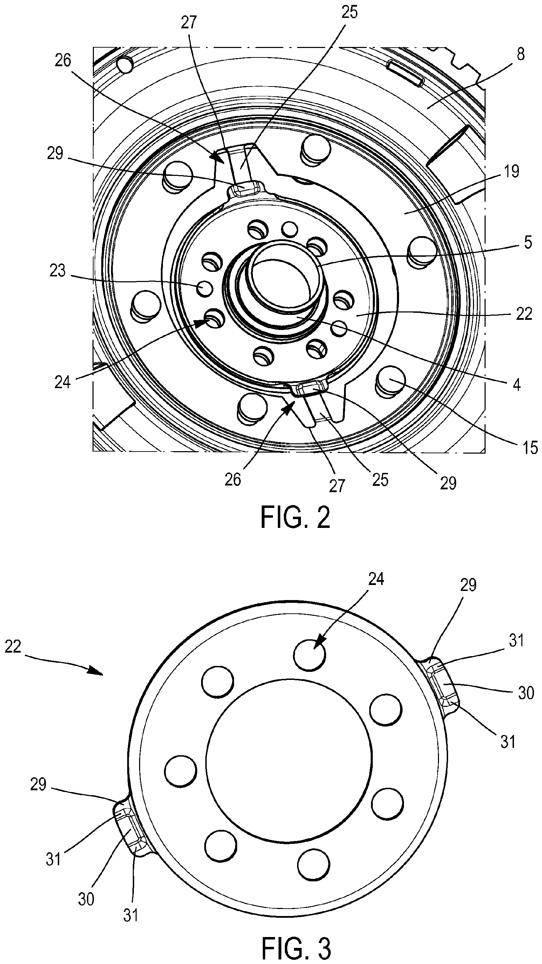

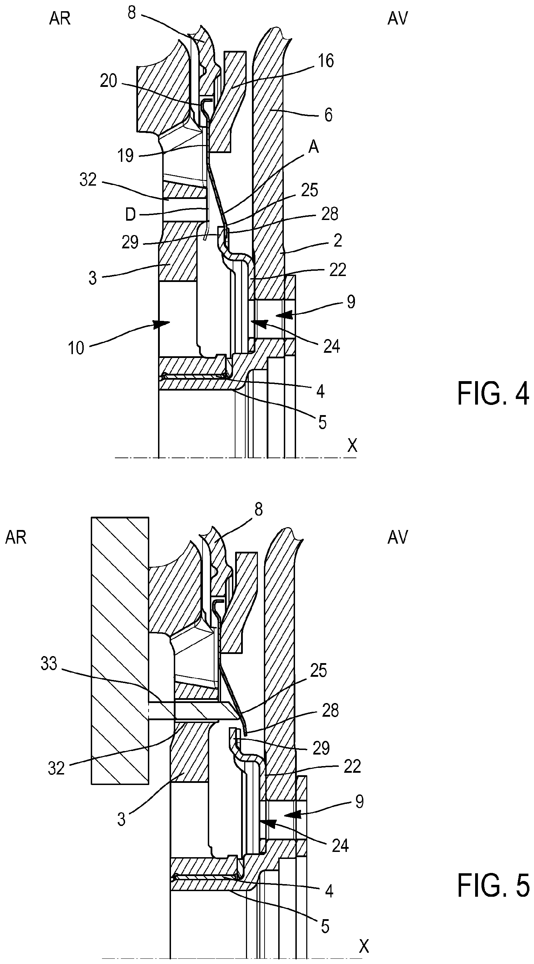

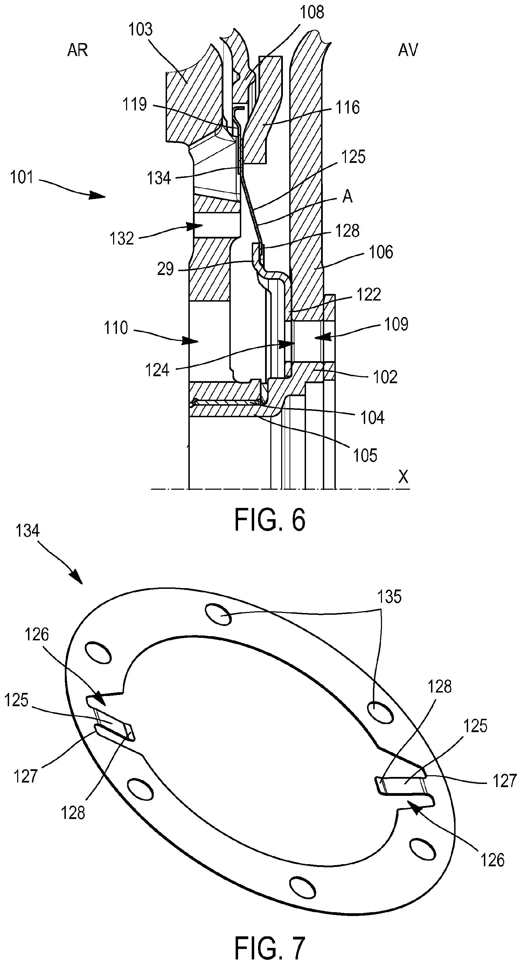

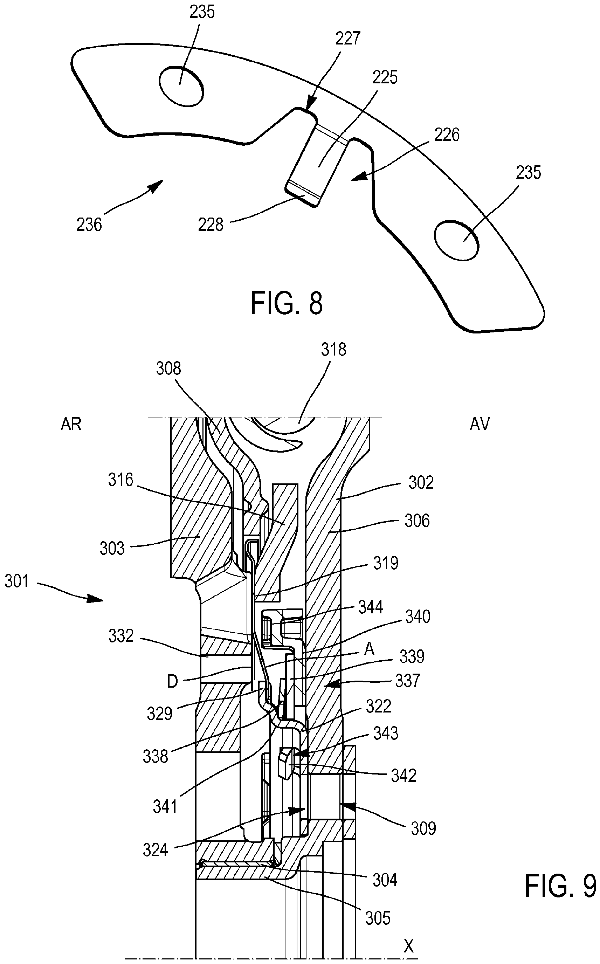

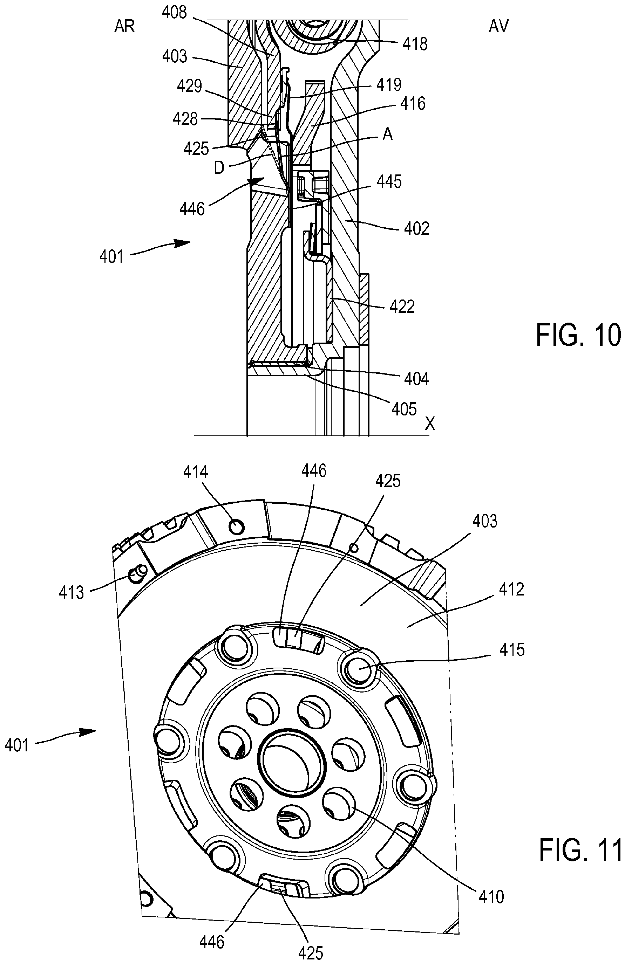

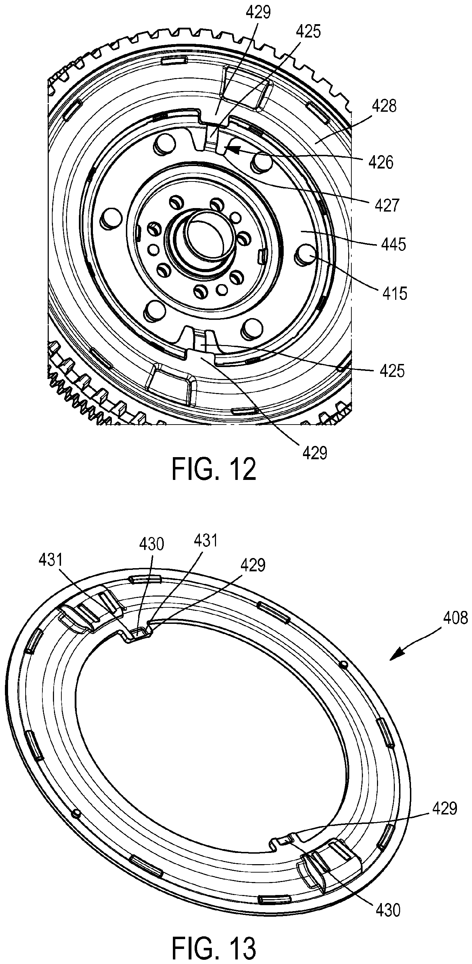

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
- **La** **figure 1** est une vue éclatée d'un double volant amortisseur selon un premier mode de réalisation.
- **La** **figure 2** est une vue détaillée du double volant amortisseur de la figure 1 illustrant le dispositif temporaire d'immobilisation apte à immobiliser le volant secondaire par rapport au volant primaire, dans une position angulaire déterminée.
- **La** **figure 3** est une vue détaillée en perspective illustrant les pattes de verrouillage du dispositif temporaire d'immobilisation représenté sur la figure 2.
- **La** **figure 4** est une vue partielle en coupe du double volant amortisseur de la figure 1 illustrant la languette élastique du dispositif temporaire d'immobilisation dans une position accrochée, repérée par la référence A, et dans une position décrochée, repérée par la référence D.
- **La** **figure 5** est une vue partielle en coupe du double volant amortisseur de la figure 1 coopérant avec un outil permettant d'éloigner la languette élastique de la patte de verrouillage afin d'autoriser une rotation relative entre les volants primaire et secondaire.
- **La** **figure 6** est une vue partielle en coupe d'un double volant amortisseur, selon un second mode de réalisation, la languette élastique étant représentée dans une position accrochée, repérée par la référence A.
- **La** **figure 7** est vue en perspective d'une rondelle portant les languettes élastiques du double volant amortisseur de la figure 6.
- **La** **figure 8** est une vue en perspective d'un élément dans lequel est formée une languette élastique, selon un troisième mode de réalisation
- **La** **figure 9** est une vue partielle en coupe d'un double volant amortisseur, selon un quatrième mode de réalisation, la languette élastique étant représentée dans une position accrochée, repérée par la référence A, et dans une position décrochée, repérée par la référence D.
- **La** **figure 10** est une vue partielle en coupe d'un double volant amortisseur selon un cinquième mode de réalisation, la languette élastique étant représentée dans une position accrochée, repérée par la référence A, et dans une position décrochée, repérée par la référence D.
- **La** **figure 11** est vue, côté volant secondaire, du double volant amortisseur de la figure 10.
- **La** **figure 12** est une vue partielle du double volant amortisseur de la figure 9 dans laquelle le volant secondaire n'a pas été représenté afin de faciliter la visualisation du dispositif temporaire d'immobilisation.
- **La** **figure 13** est une vue en perspective du couvercle du volant primaire du double volant amortisseur de la figure 10.

### Description détaillée de modes de réalisation

Dans la description et les revendications, on utilisera, les termes "externe" et "interne" ainsi que les orientations "axiale" et "radiale" pour désigner, selon les définitions données dans la description, des éléments du double volant amortisseur. Par convention, l'orientation "radiale" est dirigée orthogonalement à l'axe X de rotation du double volant amortisseur déterminant l'orientation "axiale" et, de l'intérieur vers l'extérieur en s'éloignant dudit axe, l'orientation "circonférentielle" est dirigée orthogonalement à l'axe X et orthogonalement à la direction radiale. Les termes "externe" et "interne" sont utilisés pour définir la position relative d'un élément par rapport à un autre, par référence à l'axe X, un élément proche de l'axe est ainsi qualifié d'interne par opposition à un élément externe situé radialement en périphérie. Par ailleurs, les termes "arrière" AR et "avant" AV sont utilisés pour définir la position relative d'un élément par rapport à un autre selon la direction axiale, un élément destiné à être placé proche du moteur thermique étant désigné par avant et un élément destiné à être placé proche de la boîte de vitesses étant désigné par arrière.

En relation avec les figures 1 à 5, l'on observe un double volant amortisseur 1 selon un premier mode de réalisation. Le double volant amortisseur 1 comprend un volant d'inertie primaire 2 destiné à être fixé au bout d'un vilebrequin d'un moteur à combustion, non représenté, et un volant d'inertie secondaire 3 qui est destiné à former le plateau de réaction d'un dispositif embrayage, non représenté, relié à l'arbre d'entrée d'une boîte de vitesses.

Les volants primaire 2 et secondaire 3 sont mobiles autour de l'axe de rotation X et sont, en outre, mobiles en rotation l'un par rapport à l'autre, autour dudit axe X. Le volant secondaire 3 est centré et guidé en rotation sur le volant primaire 2 au moyen d'un palier 4, tel qu'un palier lisse comme dans le mode de réalisation représenté ou un palier à roulement selon un autre mode de réalisation.

Le volant primaire 2 comporte un moyeu central 5, radialement interne, portant le palier 4 de centrage du volant secondaire 3, une portion annulaire 6 s'étendant radialement et une portion cylindrique 7 s'étendant axialement vers l'arrière depuis la périphérie externe de la portion annulaire 6. Le volant primaire 2 comporte également un couvercle annulaire 8, non illustré sur la figure 1 mais illustré sur la figure 3, fixé sur la portion cylindrique 7. Le couvercle annulaire 8 définit avec la portion annulaire 6 et la portion cylindrique 7, une chambre annulaire.

La portion annulaire 6 présente une pluralité d'orifices 9 régulièrement réparties autour de l'axe X et destinés au passage de vis de fixation permettant de fixer le volant primaire 2 sur le vilebrequin. Ces orifices 9 sont destinés à être disposés en vis-à-vis d'orifices 10 ménagés dans le volant secondaire 3, lors du montage du double volant amortisseur 1 sur le vilebrequin de manière à permettre l'introduction des vis dans les orifices 9 du volant primaire 2. Le volant primaire 2 porte sur sa périphérie extérieure une couronne dentée 11 pour l'entraînement en rotation du volant primaire 2, à l'aide d'un démarreur.

Le volant secondaire 3 comporte une surface annulaire plane 12, tournée vers l'arrière, destinée à former une surface d'appui pour une garniture de friction d'un disque d'embrayage, non représenté. Le volant secondaire 3 comporte, à proximité de son bord externe, des plots 13 et des orifices 14, représentés sur la figure 1, servant au montage du couvercle du dispositif d'embrayage.

Le volant secondaire 3 est fixé par une pluralité de rivets 15 à un voile annulaire 16 qui est disposé axialement entre la portion annulaire 6 s'étendant radialement du volant primaire 2 et le couvercle 8 du volant primaire. Le voile annulaire 16 comporte des pattes d'appui 17 s'étendant radialement vers l'extérieur et coopérant avec des organes élastiques 18.

Les organes élastiques 18 permettent de transmettre le couple entre le volant primaire 2 et le volant secondaire 3 et d'amortir les acyclismes de rotation. Les organes élastiques 18 sont ici des ressorts hélicoïdaux courbes qui sont logés dans la chambre annulaire ménagée dans le volant primaire 1 et circonférentiellement réparties autour de l'axe X. Chacun des organes élastiques 18 s'étend circonférentiellement entre deux pattes d'appui 17 du voile et deux sièges d'appui, non représentés sur les figures 1 à 5, portés par le volant primaire 2. Chaque siège d'appui porté par le volant primaire 2 est, par exemple, constitué par un bossage formé dans la portion annulaire 6 et par un bossage formé dans le couvercle 8. Ainsi, en fonctionnement, chacun des organes élastiques 18 prend appui, à une première extrémité, contre un siège d'appui porté par le volant primaire 2 et, à une seconde extrémité, contre une patte d'appui 17 ménagée sur le voile 16, de sorte à assurer la transmission du couple entre le volant primaire 2 et le volant secondaire 3.

La chambre annulaire dans laquelle sont logés les organes élastiques 18 est remplie d'un agent lubrifiant, de préférence de la graisse afin de limiter le frottement entre les organes élastiques 18 et la portion cylindrique 7 du volant primaire 2.

Afin d'éviter les fuites de lubrifiant vers l'extérieur de la chambre annulaire, le double volant amortisseur 1 est équipé de moyens d'étanchéité disposées de part et d'autre du voile 16. Ainsi, les moyens d'étanchéité assurent l'étanchéité, à l'avant, entre le voile 16 et la portion annulaire 6 du volant primaire 2, et à l'arrière, entre le voile 16 et le couvercle 8 du volant primaire 2.

Ces moyens d'étanchéité comportent une rondelle d'étanchéité 19, notamment représentée sur les figures 1, 2 et 4. La rondelle d'étanchéité 19 est fixée sur le voile 16, par l'intermédiaire des rivets 15 permettant en outre d'assurer la fixation du voile 16 au volant secondaire 3. Pour ce faire, la rondelle d'étanchéité 19 est équipée d'une pluralité d'orifices 21, régulièrement répartis autour de l'axe X et autorisant le passage des rivets 15. La rondelle d'étanchéité 19 est prise en sandwich entre le voile 16 et le volant secondaire 3.

La rondelle d'étanchéité 19 est montée pré-contrainte axialement, en appui contre le couvercle 8 du volant primaire 2 de manière à assurer l'étanchéité de la chambre annulaire. Pour ce faire, elle comporte une zone radialement externe emboutie 20, faisant saillie vers l'arrière, qui forme une surface d'appui de ladite rondelle d'étanchéité 19 contre le couvercle 8 du volant primaire 2. La rondelle d'étanchéité 19 est, par exemple, réalisée dans un acier à ressort, tel que l'acier C67.

Par ailleurs, le double volant amortisseur 1 comporte une rondelle d'appui 22 qui est destinée à former une surface d'appui pour la tête des vis de fixation du double volant amortisseur 1 sur le vilebrequin. Comme représenté sur la figure 2, la rondelle d'appui 22 est fixée contre la portion annulaire 6 du volant primaire par une pluralité de rivets 23. La rondelle d'appui 22 comporte une pluralité d'orifices 24, faisant face aux orifices 9 ménagés dans la portion annulaire 6 du volant primaire 2, de sorte à permettre le passage des vis de fixation du volant primaire 2 sur le vilebrequin.

En relation avec les figures 2 et 4, on observe un dispositif d'immobilisation temporaire apte à immobiliser le volant primaire 2 par rapport au volant secondaire 3 dans une position angulaire de montage déterminée. La position angulaire de montage, notamment représentée sur la figure 2, correspond à une position dans laquelle les organes élastiques 8 sont au repos et les orifices 10 ménagés dans le volant secondaire 3 se trouvent en vis-à-vis des orifices 9 ménagés dans le volant primaire 2.

Le dispositif d'immobilisation temporaire comporte deux languettes élastiques 25, diamétralement opposées, et deux pattes de verrouillage 29, diamétralement opposées. Dans le mode de réalisation illustré sur les figures 2 et 4, les languettes élastiques 25 sont dirigées radialement vers l'intérieur et formées dans la rondelle d'étanchéité 19. Les languettes élastiques 25 sont chacune ménagée à la faveur d'une échancrure 26. L'extrémité proximale de chacune des languettes élastiques 25 est reliée au fond 27 de l'une des échancrures 25. Les pattes de verrouillage 26 sont portées par la rondelle d'appui 22 et font saillie radialement vers l'extérieur par rapport à la portion centrale de la rondelle d'appui 22. Les pattes de verrouillage ne s'étendent que sur un secteur angulaire limité, par exemple de l'ordre d'une dizaine de degrés, et en tout état de cause inférieur au débattement maximum autorisé entre le volant primaire 2 et le volant secondaire 3.

Dans la position angulaire de montage, chacune des languettes élastiques 25 se trouve radialement en vis-à-vis de l'une des pattes de verrouillage 29. Ainsi, comme représenté sur les figures 2 et 4, chacune des languettes élastiques 25 est apte à prendre une position accrochée dans laquelle elle coopère avec l'une des pattes de verrouillage 29. Dans leur position accrochée, l'extrémité libre 28 de chaque languette élastique 25 est reçue dans une encoche 30, représentée sur la figure 3. Chaque encoche 30 est ménagée sur l'une des pattes de verrouillage 29 et est bordée circonférentiellement par deux congés 31. L'extrémité libre 28 des languettes élastiques 25 est recourbée par rapport au corps desdites languettes élastiques 25. Cette courbure est agencée de telle sorte que l'extrémité libre de chacune des languettes élastiques 25 vienne se plaquer parallèlement contre le fond de l'une des encoches 30 lorsque les languettes élastiques 25 sont dans leur position accrochée, ce qui permet d'optimiser les surfaces de contact entre les languettes élastiques 25 et les pattes de verrouillage 29.

Dans la position accrochée, chaque languette élastique 25 est contrainte et plaquée contre le fond de l'encoche 30 associée de sorte à exercer un effort de retenue s'opposant à la rotation relative des volants primaire 2 et secondaire 3. Dès lors, lorsque lesdites languettes élastiques 25 sont dans leur position accrochée, le dispositif d'immobilisation temporaire est actif ce qui permet de faciliter les opérations d'assemblage de la chaîne de transmission.

Le dispositif d'immobilisation temporaire doit toutefois être désactivé, lorsque la chaîne de transmission a été assemblée afin de permettre la rotation relative des deux volants primaire 2 et secondaire 3. Cette désactivation peut avoir lieu lors du premier démarrage du moteur ou lorsque le véhicule roule pour la première fois avec une vitesse enclenchée. Dans les deux cas précités, un couple est transmis entre le volant primaire 2 et le volant secondaire 3, ce couple étant suffisant pour vaincre l'effort de retenue exercé par les languettes élastiques 25 sur les pattes de verrouillage 29. Typiquement, les languettes élastiques 25 et les pattes de verrouillage 29 sont agencées de telle sorte que le couple seuil permettant de vaincre l'effort de retenue exercé par les languettes élastiques 25 soit supérieur à 5 Nm, par exemple de l'ordre de 15 Nm.

Lorsque le couple transmis entre les volants 2, 3 est suffisant pour vaincre l'effort de retenue exercé par les languettes élastiques 25, les volants primaire 2 et secondaire 3 tournent l'un par rapport à l'autre autour de l'axe X de telle sorte que les languettes élastiques 25 montent sur l'un des congés 31 bordant l'encoche 30 puis se décrochent de la patte de verrouillage 29 lorsque l'angle de rotation est suffisant. Chaque languette élastique 25 est alors élastiquement rappelée vers sa position décrochée, repérée par la référence D sur la figure 4. Dans leur position décrochée, les languettes élastiques 25 ne coopèrent plus avec leur patte de verrouillage 29 associée et ne se trouvent plus sur la trajectoire de celle-ci lors d'une rotation relative entre les volants primaire 2 et secondaire 3. Dès lors, le dispositif d'immobilisation temporaire cesse d'être actif et le double volant amortisseur 1 est ainsi apte à filtrer les vibrations générées par le moteur.

Il peut également s'avérer nécessaire d'éloigner provisoirement les languettes élastiques 25 de leur patte de verrouillage 29 de manière à autoriser temporairement la rotation relative des volants primaire 2 et secondaire 3, avant le montage du double volant amortisseur sur le véhicule. En effet, les fabricants de double volant amortisseur se livrent généralement, une fois que le double volant amortisseur est assemblé, à des opérations de contrôle visant notamment à qualifier la raideur des organes élastiques 18. Or, pour de telles opérations de contrôle, il est nécessaire d'autoriser la rotation relative des volants primaire 2 et secondaire 3.

Pour ce faire, comme représenté sur la figure 5, le volant primaire 2 comporte des orifices 32 faisant chacun face à l'une des languettes élastiques 25 et permettant le passage d'une tige 33 apte à déplacer les languettes élastiques 25 selon une direction opposée à leur position décrochée de manière à éloigner l'extrémité libre 28 des languettes élastiques 25 des pattes de verrouillage 29. Aussi, tant que les tiges 33 coopèrent avec les languettes élastiques 25, il est possible de faire tourner le volant secondaire 3 par rapport au volant primaire 2 afin de réaliser les opérations de contrôle. Lorsque les opérations de contrôle sont terminées, les volants primaire 2 et secondaire 3 sont positionnés dans leur position angulaire de montage déterminée et les tiges 31 sont retirées de sorte que les languettes élastiques 25 retournent dans leur position accrochée sous l'effet de leur propre élasticité. Notons en outre qu'il peut être procédé de manière similaire pour positionner les languettes élastiques 25 dans leur position accrochée, lors de l'assemblage du double volant amortisseur 1.

Sur les figures 6 et 7, on observe un double volant amortisseur selon un second mode de réalisation. Les éléments identiques ou analogues aux éléments des figures 1 à 5, c'est-à-dire remplissant la même fonction, portent le même chiffre de référence augmenté de 100. Ce mode de réalisation diffère du mode de réalisation précédant en ce que les languettes élastiques 125 du dispositif temporaire d'immobilisation ne sont pas formées sur la rondelle d'étanchéité 119 assurant l'étanchéité de la chambre annulaire mais sont formées sur une rondelle 134 additionnelle, illustrée sur la figure 7. Si ce mode de réalisation comporte plus de composants que le mode de réalisation précédent, il autorise l'utilisation de matériaux, de traitements et/ou d'épaisseurs de tôle différents pour réaliser les rondelles 119, 134, ce qui peut s'avérer particulièrement avantageux compte-tenu de leur fonction respective.

La rondelle 134 est formée dans une tôle métallique, en acier à ressort, tel que l'acier C67. La rondelle 134 comporte une pluralité d'orifices 135 permettant le passage de rivets aptes à assurer sa fixation au voile 116 et au volant secondaire 103. Sur la figure 6, l'on observe que la rondelle 134 portant les languettes élastiques 125 est prise en sandwich entre la rondelle d'étanchéité 119 et le voile 116. Selon un mode de réalisation, les mêmes rivets assurent la solidarisation du voile, de la rondelle d'étanchéité 119 et la rondelle 134 portant les languettes élastiques 125 au volant secondaire 103.

La figure 8 représente des languettes élastiques 225 destinées à équiper un double volant amortisseur selon un troisième mode de réalisation. Les éléments identiques ou analogues aux éléments des figures 1 à 5, portent le même chiffre de référence augmenté de 200.

Chaque languette élastique 225 est formée dans un morceau de tôle 236. Ce morceau de tôle 236 présente ici une forme arquée. Chaque morceau de tôle 236 comporte un ou plusieurs orifices 235 permettant le passage d'organes de fixation aptes à assurer sa fixation sur le voile et/ou sur le volant secondaire. Le morceau de tôle 236 peut notamment être sertie sur le voile au moyen de pions extrudés, non représentés.

Sur la figure 9, on observe un double volant amortisseur selon un quatrième mode de réalisation. Les éléments identiques ou analogues aux éléments des figures 1 à 5, portent le même chiffre de référence augmenté de 300.

Ce mode de réalisation diffère du mode de réalisation représenté sur les figures 1 à 4 en ce que la rondelle d'appui 322 dans laquelle sont formées les pattes de verrouillage 329 forme en outre un couvercle pour un dispositif de frottement 337. Le dispositif de frottement 337, également appelé dispositif d'hystérésis, est agencé pour exercer un couple résistant de frottement lors de la rotation relative entre les volants primaire 302 et secondaire 303. Un tel dispositif de frottement 337 est ainsi apte à dissiper par frottement l'énergie accumulée dans les organes élastiques 318.

Dans le mode de réalisation représenté, le dispositif de frottement 337 comporte une rondelle élastique 338, une rondelle de frottement 339 solidarisée en rotation au volant primaire 302 et une seconde rondelle de frottement 340 apte à être entraînée en rotation par rapport au volant primaire 302, lors d'un débattement relatif entre les volants primaire 302 et secondaire 303.

La rondelle élastique 338 est par exemple une rondelle métallique de type rondelle « Belleville », tandis que la première et la seconde rondelles de frottement 339, 340 sont de préférence réalisées en plastique.

La rondelle élastique 338 est interposée entre la rondelle de frottement 339 et un rebord annulaire 341 de la rondelle d'appui 322. Le rebord annulaire 341 forme ainsi une surface d'appui pour ladite rondelle élastique 338. La rondelle élastique 338 assure une charge axiale qui plaque la rondelle de frottement 339 contre la rondelle de frottement 340 et cette dernière contre la portion annulaire 306 du volant primaire 302.

La rondelle de frottement 339 est solidarisée en rotation au volant primaire 302 au moyen d'un ou de plusieurs doigts radiaux 342 qui sont chacun emboîtés dans une ouverture 343 pratiquée dans la rondelle d'appui 322.

Par ailleurs, la rondelle de frottement 340 comporte un ou plusieurs doigts 344 d'orientation axiale qui sont chacun interposés avec un jeu circonférentiel déterminé entre deux surfaces de butée formés dans le voile 316 de telle sorte que la rondelle de frottement 340 tourne par rapport au volant primaire 302 dès lors que le jeu circonférentiel a été rattrapé.

Lorsque la rondelle de frottement 340 est entrainée en rotation par rapport au volant primaire 302 des efforts de frottement sont exercés, d'une part, entre la face avant de la rondelle de frottement 340 et la portion annulaire 306 du volant primaire 302, et, d'autre part, entre la face arrière de la rondelle de frottement 340 et la face avant de la rondelle de frottement 339.

Les figures 10 à 12 représentent un double volant amortisseur selon un cinquième mode de réalisation. Les éléments identiques ou analogues aux éléments des figures 1 à 5, portent le même chiffre de référence augmenté de 400.

Dans ce mode de réalisation, les pattes de verrouillage 429 sont formées dans le couvercle 428 du volant primaire 402. Les pattes de verrouillage 429 s'étendent radialement vers l'intérieur à partir du rebord radialement interne du couvercle 428. Comme dans les modes de réalisation précédents, les pattes de verrouillages 429 comportent une encoche 430 bordée circonférentiellement par des congés 431. Les languettes élastiques 425 sont ici formées dans une rondelle 445 distincte de la rondelle d'étanchéité 419 assurant l'étanchéité de la chambre annulaire, à l'arrière. Les languettes élastiques 425 s'étendant radialement vers l'extérieur et se trouvent radialement en vis-à-vis des pattes de verrouillage 429 lorsque les volants primaire 402 et secondaire 403 sont dans leur position angulaire de montage, comme représenté sur la figure 12.

L'extrémité libre 428 de chaque languette élastique 425 est élastiquement rappelée vers l'arrière, en direction du volant secondaire 403. Ainsi, en position accrochée, les languettes élastiques 425 exercent contre le fond des encoches 430 des pattes de verrouillage 429 un effort de retenue s'opposant à la rotation relative des volants primaire 402 et secondaire 403. En outre, dès lors que le couple transmis entre le volant primaire 402 et le volant secondaire 403 prend une valeur supérieure au seuil permettant de vaincre l'effort de retenue, les volants primaire402 et secondaire 403 tournent l'un par rapport à l'autre de telle sorte que, passer un certain angle de rotation, les languettes élastiques 425 se décrochent des pattes de verrouillage 429 et sont élastiquement rappelée vers leur position décrochée, c'est-à-dire leur position de repos, repérée par la référence D sur la figure 10. Dans leur position décrochée, l'extrémité libre 428 des languettes élastiques 425 repose contre la surface avant du volant secondaire 403. Le dispositif d'immobilisation temporaire est ainsi désactivé.

En relation avec la figure 11, l'on observe que le volant secondaire 403 peut également être équipé d'ouvertures 446 aptes à permettre le passage de tiges permettant de contraindre les languettes élastiques dans une direction opposée à leur position décrochée de sorte à permettre la mise en place des languettes élastiques dans leur position accrochée ou permettre de pousser les languettes élastiques 425 au-delà de leur position accrochée de sorte à permettre des opérations de contrôle du double volant amortisseur.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

En particulier, si dans tous les modes de réalisation décrits ci-dessus, les pattes de verrouillage sont solidaires en rotation du volant primaire et les languettes élastiques solidaires en rotation du volant primaire, il est également possible de prévoir des languettes élastiques et des pattes de verrouillage respectivement solidaires en rotation du volant primaire et du volant secondaire.

De même, bien que dans les modes de réalisation décrits ci-dessus, le dispositif d'immobilisation temporaire comporte deux pattes de verrouillage et deux languettes élastiques diamétralement opposés, il est également possible de ne prévoir qu'une seule languette élastique et qu'une patte de verrouillage ou au contraire plus de deux languettes élastiques et deux pattes de verrouillage.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes.

Dans les revendications, tout signe de référence entre parenthèses ne saurait être interprété comme une limitation de la revendication.

## Revendications

1. Double volant amortisseur (1, 101, 301, 401) pour véhicule automobile comportant :
- un volant primaire (2, 102, 302, 402) et un volant secondaire (3, 103, 303, 403) mobiles en rotation l'un par rapport à l'autre autour d'un axe X ;
- des organes élastiques (18, 318, 418) interposés entre le volant primaire et le volant secondaire et aptes à transmettre un couple et amortir les acyclismes de rotation entre le volant primaire et le volant secondaire ; et
- un dispositif temporaire d'immobilisation apte à immobiliser le volant secondaire par rapport au volant primaire dans une position angulaire déterminée ;
ledit double volant amortisseur étant **caractérisé en ce que** le dispositif temporaire d'immobilisation comporte une languette élastique (25, 125, 225, 325, 425), solidaire en rotation de l'un des volants primaire et secondaire, et une patte de verrouillage (29, 129, 329, 429), solidaire en rotation de l'autre des volants primaire et secondaire,
la languette élastique (25, 125, 225, 325, 425) étant, dans ladite position angulaire déterminée, apte à prendre une position accrochée dans laquelle elle coopère avec la patte de verrouillage (29, 129, 329, 429) ; la languette élastique (25, 125, 225, 325, 425) étant, dans ladite position accrochée, contrainte contre la patte de verrouillage (29, 129, 329, 429) de manière à exercer un effort de retenue s'opposant à la rotation du volant secondaire (3, 103, 303, 403) par rapport au volant primaire (2, 102, 302, 402) ; la languette élastique (25, 125, 225, 325, 425) étant ainsi apte à être rappelée de sa position accrochée à une position décrochée dans laquelle la languette élastique (25, 125, 225, 325, 425) est placée à distance de la patte de verrouillage (29, 129, 329, 429) et autorise la rotation du volant secondaire (3, 103, 303, 403) par rapport au volant primaire (2, 102, 302, 402), lorsqu'un couple transmis entre le volant primaire et le volant secondaire est suffisant pour vaincre l'effort de retenue exercé par la languette élastique (25, 125, 225, 325, 425) sur la patte de verrouillage (29, 129, 329, 429) .

2. Double volant amortisseur selon la revendication 1, dans laquelle la patte de verrouillage (29, 129, 329, 429) présente une encoche (30, 430) apte à recevoir ladite languette élastique (25, 125, 225, 325, 425) dans sa position accrochée, ladite encoche (30, 430) étant bordée de part et d'autre selon la direction circonférentielle par des congés (31, 431).

3. Double volant amortisseur selon la revendication 1 ou 2, dans lequel la languette élastique (25, 125, 225, 325, 425) est formée dans une rondelle de tôle (19, 236, 319, 445) ou dans un morceau de tôle (134).

4. Double volant amortisseur selon la revendication 3, dans lequel la rondelle de tôle (19, 236, 319, 445) ou le morceau de tôle (134) comporte une échancrure (26, 126, 226, 426) présentant un fond (27, 127, 227, 427) et dans lequel la languette élastique (25, 125, 225, 325, 425) comporte une extrémité libre (28, 128, 228, 328, 428) apte à coopérer avec la patte de verrouillage (29, 129, 329, 429) dans sa position accrochée et une extrémité proximale reliée au fond (27, 127, 227, 427) de l'échancrure.

5. Double volant amortisseur selon l'une quelconque des revendications 1 à 4, dans lequel le volant primaire (2, 102, 302, 402) est agencé pour former une chambre annulaire interne dans laquelle sont logés les organes élastiques (18, 318, 418), lesdits organes élastiques (18, 318, 418) étant interposés circonférentiellement entre des butées portées par le volant primaire (2, 102, 302, 402) et des pattes d'appui radiales (17) s'étendant à l'intérieur de ladite chambre annulaire et formées dans un voile (16, 116, 316, 416) annulaire fixé au volant secondaire (3, 103, 303, 403).

6. Double volant amortisseur selon la revendication 5, dans lequel la languette élastique (25, 125, 225, 325, 425) et le voile (16, 116, 316, 416) sont fixés au volant secondaire (3, 103, 303, 403) par des organes de fixation (15, 415) communs.

7. Double volant amortisseur selon la revendication 5 ou 6, dans lequel la chambre annulaire est remplie de lubrifiant, la languette élastique (25, 325) étant formée dans une rondelle d'étanchéité (19, 319) qui est fixée sur le voile (16, 316) et comporte un bord externe plaqué contre le volant primaire (2, 302) afin de contribuer à l'étanchéité de la chambre annulaire.

8. Double volant amortisseur selon l'une quelconque des revendications 1 à 7, dans lequel le volant primaire (2, 102, 302) comporte une pluralité d'orifices (9, 109, 309) aptes à permettre le passage de vis destinés à la fixation du volant primaire (2, 102, 302) à un vilebrequin d'un moteur à combustion, le double volant amortisseur comportant en outre une rondelle d'appui (22, 122, 322) destinée à l'appui des têtes desdites vis, la rondelle d'appui (22, 122, 322) comportant une pluralité d'orifices (24, 124, 324) de passage desdites vis et dans lequel la patte de verrouillage (29, 129,3 29) est formée dans ladite rondelle d'appui 22, 122, 322) et fait saillie radialement vers l'extérieur.

9. Double volant amortisseur selon la revendication 8, comportant en outre un dispositif de frottement (337) agencé pour exercer un couple résistant de frottement lors de la rotation relative entre les volants primaire et secondaire, ledit dispositif de frottement (337) comportant une première rondelle de frottement (340) comportant une surface de frottement en contact avec le volant primaire (302), ladite première rondelle de frottement (340) étant apte à être entraînée en rotation par rapport au volant primaire (302) lors de la rotation relative du volant secondaire (303) et une rondelle élastique (338) apte à exercer une charge axiale sur ladite rondelle de frottement (340) de manière à appuyer la rondelle de frottement (340) contre le volant primaire (302), ladite rondelle élastique (338) étant en appui axial contre un rebord (341) de la rondelle d'appui (322).

10. Double volant amortisseur selon l'une quelconque des revendications 1 à 6, le volant primaire (402) est agencé pour former une chambre annulaire interne dans laquelle sont logés les organes élastiques (418), ladite chambre annulaire étant limitée axialement par un couvercle annulaire (408), la patte de verrouillage (429) étant formée dans ledit couvercle annulaire (408) et faisant saillie radialement vers l'intérieur.

11. Double volant amortisseur selon l'une quelconque des revendications 1 à 10, dans lequel la languette élastique (25, 125, 225, 325, 425) est solidaire du volant secondaire (3, 103, 303, 403) et dans lequel le volant primaire (2, 102, 302, 402) comporte un orifice (32, 132, 332, 446) faisant face à ladite languette élastique et apte à permettre l'introduction d'un outil (33) permettant de pousser la languette élastique dans une direction opposée à sa position décrochée de manière à éloigner la languette élastique de la patte de verrouillage (29, 129, 329, 429).

## Patentansprüche

1. Zweimassenschwungrad (1, 101, 301, 401) für Kraftfahrzeug, das Folgendes umfasst:
- ein Primärschwungrad (2, 102, 302, 402) und ein Sekundärschwungrad (3, 103, 303, 403), die in Drehung zueinander um eine Achse X beweglich sind;
- elastische Organe (18, 318, 418), die zwischen dem Primärschwungrad und dem Sekundärschwungrad eingefügt und geeignet sind, ein Drehmoment zu übertragen und Drehungsazyklismen zwischen dem Primärschwungrad und dem Sekundärschwungrad zu dämpfen; und
- eine vorübergehende Vorrichtung zum Immobilisieren, die geeignet ist, das Sekundärschwungrad bezüglich des Primärschwungrads in einer bestimmten Winkelposition zu immobilisieren;
Zweimassenschwungrad , **dadurch gekennzeichnet, dass** die vorübergehende Vorrichtung zur Immobilisierung eine elastische Lasche (25, 125, 225, 325, 425) umfasst, die in Drehung mit einem des Primärschwungrads und des Sekundärschwungrads fest verbunden ist, und eine Verriegelungspratze (29, 129, 329, 429), die in Drehung fest mit dem anderen des Primärschwungrads und des Sekundärschwungrads verbunden ist,
wobei die elastische Lasche (25, 125, 225, 325, 425) in der bestimmten Winkelposition geeignet ist, eine eingehängte Position einzunehmen, in der sie mit der Verriegelungspratze (29, 129, 329, 429) zusammenwirkt; wobei die elastische Lasche (25, 125, 225, 325, 425) in der eingehängten Position gegen die Verriegelungspratze (29, 129, 329, 429) derart gezwungen wird, dass sie eine Rückhaltekraft ausübt, die sich der Drehung des Sekundärschwungrads (3, 103, 303, 403) bezüglich des Primärschwungrads (2, 102, 302, 402) entgegensetzt; wobei die elastische Lasche (25, 125, 225, 325, 425) daher geeignet ist, von ihrer eingehängten Position zu einer ausgehängten Position zurückgestellt zu werden, in der die elastische Lasche (25, 125, 225, 325, 425) von der Verriegelungspratze (29, 129, 329, 429) beabstandet platziert ist und das Drehen des Sekundärschwungrads (3, 103, 303, 403) bezüglich des Primärschwungrads (2, 102, 302, 402) gestattet, wenn ein zwischen dem Primärschwungrad und dem Sekundärschwungrad übertragenes Drehmoment ausreicht, um die Rückhaltekraft zu überwinden, die von der elastischen Lasche (25, 125, 225, 325, 425) auf der Verriegelungspratze (29, 129, 329, 429) ausgeübt wird.

2. Zweimassenschwungrad nach Anspruch 1, wobei die Verriegelungspratze (29, 129, 329, 429) eine Kerbe (30, 430) aufweist, die geeignet ist, die elastische Lasche (25, 125, 225, 325, 425) in ihrer eingehängten Position aufzunehmen, wobei die Kerbe (30, 430) zu beiden Seiten entlang der umfänglichen Richtung durch Hohlkehlen (31, 431) begrenzt ist.

3. Zweimassenschwungrad nach Anspruch 1 oder 2, wobei die elastische Lasche (25, 125, 225, 325, 425) in einer Blechscheibe (19, 236, 319, 445) oder in einem Blechstück (134) gebildet ist.

4. Zweimassenschwungrad nach Anspruch 3, wobei die Blechscheibe (19, 236, 319, 445) oder das Blechstück (134) eine Ausnehmung (26, 126, 226, 426) umfasst, die einen Grund (27, 127, 227, 427) aufweist, und wobei die elastische Lasche (25, 125, 225, 325, 425) ein freies Ende (28, 128, 228, 328, 428) umfasst, das geeignet ist, mit der Verriegelungspratze (29, 129, 329, 429) in ihrer eingehängten Position zusammenzuwirken, und ein proximales Ende, das mit dem Grund (27, 127, 227, 427) der Ausnehmung verbunden ist.

5. Zweimassenschwungrad nach einem der Ansprüche 1 bis 4, wobei das Primärschwungrad (2, 102, 302, 402) eingerichtet ist, um eine interne Ringkammer zu bilden, in der die elastischen Organe (18, 318, 418) untergebracht sind, wobei die elastischen Organe (18, 318, 418) umfänglich zwischen Anschlägen, die von dem Primärschwungrad (2, 102, 302, 402) getragen werden, und radialen Auflagepratzen (17), die sich in dem Inneren der Ringkammer erstrecken und in einer ringförmigen Schale (16, 116, 316, 416) gebildet sind, die an dem Sekundärschwungrad (3, 103, 303, 403) befestigt ist, eingefügt sind.

6. Zweimassenschwungrad nach Anspruch 5, wobei die elastische Lasche (25, 125, 225, 325, 425) und die Schale (16, 116, 316, 416) an dem Sekundärschwungrad (3, 103, 303, 403) durch gemeinsame Befestigungsorgane (15, 415) befestigt sind.

7. Zweimassenschwungrad nach Anspruch 5 oder 6, wobei die Ringkammer mit Schmiermittel gefüllt ist, die elastische Lasche (25, 325) in einer Abdichtscheibe (19, 319), die auf der Schale (16, 316) befestigt ist, gebildet ist und einen externen Rand umfasst, der gegen das Primärschwungrad (2, 302) angedrückt ist, um zur Abdichtung der Ringkammer beizutragen.

8. Zweimassenschwungrad nach einem der Ansprüche 1 bis 7, wobei das Primärschwungrad (2, 102, 302) eine Mehrzahl von Öffnungen (9, 109, 309) umfasst, die geeignet sind, um das Durchgehen von Schrauben zu erlauben, die zum Befestigen des Primärschwungrads (2, 102, 302) an einer Kurbelwelle einer Brennkraftmaschine bestimmt sind, wobei das Zweimassenschwungrad außerdem eine Auflagescheibe (22, 122, 322) umfasst, die zum Aufliegen der Köpfe der Schrauben bestimmt ist, wobei die Auflagescheibe (22, 122, 322) eine Mehrzahl von Durchgangsöffnungen (24, 124, 324) der Schrauben umfasst, und wobei die Verriegelungspratze (29, 129, 329) in der Auflagescheibe (22, 142, 322) gebildet ist und radial nach außen vorragt.

9. Zweimassenschwungrad nach Anspruch 8, das außerdem eine Reibvorrichtung (337) umfasst, die eingerichtet ist, um ein Reibwiderstandsmoment bei der relativen Drehung zwischen dem Primär- und Sekundärschwungrad auszuüben, wobei die Reibvorrichtung (337) eine erste Reibscheibe (340) umfasst, die eine Reiboberfläche in Berührung mit dem Primärschwungrad (302) umfasst, wobei die erste Reibscheibe (340) geeignet ist, in Drehung bezüglich des Primärschwungrads (302) bei der relativen Drehung des Sekundärschwungrads (303) angetrieben zu werden, und eine elastische Scheibe (338), die geeignet ist, eine axiale Last auf die Reibscheibe (340) derart auszuüben, dass die Reibscheibe (340) gegen das Primärschwungrad (302) angedrückt wird, wobei die elastische Scheibe (338) in axialer Auflage gegen eine Krempe (341) der Auflagescheibe (322) aufliegt.

10. Zweimassenschwungrad nach einem der Ansprüche 1 bis 6, wobei das Primärschwungrad (402) eingerichtet ist, um eine interne Ringkammer zu bilden, in der die elastischen Organe (418) untergebracht sind, wobei die Ringkammer axial durch einen ringförmigen Deckel (408) begrenzt ist, wobei die Verriegelungspratze (429) in dem ringförmigen Deckel (408) gebildet ist und radial nach innen vorragt.

11. Zweimassenschwungrad nach einem der Ansprüche 1 bis 10, wobei die elastische Lasche (25, 125, 225, 325, 425) fest mit dem Sekundärschwungrad (3, 103, 303, 403) verbunden ist, und wobei das Primärschwungrad (2, 102, 302, 402) eine Öffnung (32, 132, 332, 446) umfasst, die der elastischen Lasche gegenüberliegt und geeignet ist, das Einführen eines Werkzeugs (33) zu erlauben, das es erlaubt, die elastische Lasche in eine Richtung entgegengesetzt zu ihrer ausgehängten Position derart zu schieben, dass die elastische Lasche von der Verriegelungspratze (29, 129, 329, 429) entfernt wird.

## Claims

1. Dual mass flywheel (1, 101, 301, 401) for a motor vehicle comprising:
- a primary flywheel (2, 102, 302, 402) and a secondary flywheel (3, 103, 303, 403) which are mobile in rotation relative to one another around an axis X;
- resilient units (18, 318, 418) which are interposed between the primary flywheel and the secondary flywheel, and can transmit torque and damp the rotational irregularities between the primary flywheel and the secondary flywheel; and
- a temporary immobilisation device which can immobilise the secondary flywheel relative to the primary flywheel in a determined angular position; the said dual mass flywheel being **characterised in that** the temporary immobilisation device comprises a resilient tongue (25, 125, 225, 325, 425), which is integral in rotation with one of the primary and secondary flywheels, and a locking lug (29, 129, 329, 429), which is integral in rotation with the other one of the primary and secondary flywheels,
the resilient tongue (25, 125, 225, 325, 425) being able, in the said determined angular position, to adopt a hooked position in which it co-operates with the locking lug (29, 129, 329, 429); the resilient tongue (25, 125, 225, 325, 425) being, in the said hooked position, constrained against the locking lug (29, 129, 329, 429), such as to exert a retention force which opposes the rotation of the secondary flywheel (3, 103, 303, 403) relative to the primary flywheel (2, 102, 302, 402); the resilient tongue (25, 125, 225, 325, 425) thus being able to be returned from its hooked position to a unhooked position in which the resilient tongue (25, 125, 225, 325, 425) is placed spaced from the locking lug (29, 129, 329, 429), and permits the rotation of the secondary flywheel (3, 103, 303, 403) relative to the primary flywheel (2, 102, 302, 402), when torque transmitted between the primary flywheel and the secondary flywheel is sufficient to overcome the retention force exerted by the resilient tongue (25, 125, 225, 325, 425) on the locking lug (29, 129, 329, 429).

2. Dual mass flywheel according to claim 1, wherein the locking lug (29, 129, 329, 429) has a notch (30, 430) which can receive the said resilient tongue (25, 125, 225, 325, 425) in its hooked position, the said notch (30, 430) being bordered on both sides in the circumferential direction by fillets (31, 431).

3. Dual mass flywheel according to claim 1 or 2, wherein the resilient tongue (25, 125, 225, 325, 425) is formed in a metal plate washer (19, 236, 319, 445) or in a piece of metal plate (134).

4. Dual mass flywheel according to claim 3, wherein the metal plate washer (19, 236, 319, 445) or the piece of metal plate (134) comprises a cut-out (26, 126, 226, 426) with a base (27, 127, 227, 427), and wherein the resilient tongue (25, 125, 225, 325, 425) comprises a free end (28, 128, 228, 328, 428) which can co-operate with the locking lug (29, 129, 329, 429) in its hooked position, and a proximal end which is connected to the base (27, 127, 227, 427) of the cut-out.

5. Dual mass flywheel according to any one of claims 1 to 4, wherein the primary flywheel (2, 102, 302, 402) is designed to form an inner annular chamber in which the said resilient units (18, 318, 418) are accommodated, the said resilient units (18, 318, 418) being interposed circumferentially between stops which are supported by the primary flywheel (2, 102, 302, 402), and radial support lugs (17) which extend inside the said annular chamber, and are formed in an annular ring (16, 116, 316, 416) which is secured on the secondary flywheel (3, 103, 303, 403).

6. Dual mass flywheel according to claim 5, wherein the resilient tongue (25, 125, 225, 325, 425) and the ring (16, 116, 316, 416) are secured on the secondary flywheel (3, 103, 303, 403) by common securing units (15, 415).

7. Dual mass flywheel according to claim 5 or 6, wherein the annular chamber is filled with lubricant, the resilient tongue (25, 325) being formed in a sealing washer (19, 319) which is secured on the ring (16, 316), and comprising an outer edge which is placed against the primary flywheel (2, 302), in order to contribute to the sealing of the annular chamber.

8. Dual mass flywheel according to any one of claims 1 to 7, wherein the primary flywheel (2, 102, 302) comprises a plurality of orifices (9, 109, 309) which can permit the passage of screws which are designed for the securing of the primary flywheel (2, 102, 302) on a crankshaft of a combustion engine, the dual mass flywheel additionally comprising a support washer (22, 122, 322) which is designed for the support of the heads of the said screws, the support washer (22, 122, 322) comprising a plurality of orifices (24, 124, 324) for passage of the said screws, and wherein the locking lug (29, 129, 329) is formed in the said support washer (22, 122, 322), and projects radially towards the exterior.

9. Dual mass flywheel according to claim 8, additionally comprising a friction device (337) which is designed to exert a resistant friction torque during the relative rotation between the primary and secondary flywheels, the said friction device (337) comprising a first friction washer (340) comprising a friction surface which is in contact with the primary flywheel (302), the said first friction washer (340) being able to be rotated relative to the primary flywheel (302) during the relative rotation of the secondary flywheel (303), and a resilient washer (338) which can apply an axial load on the said friction washer (340), such as to support the friction washer (340) against the primary flywheel (302), the said resilient washer (338) being supported axially against a rim (341) of the support washer (332) .

10. Dual mass flywheel according to any one of claims 1 to 6, the primary flywheel (402) being designed to form an inner annular chamber in which the resilient units (418) are accommodated, the said annular chamber being delimited axially by an annular cover (408), the locking lug (429) being formed in the said annular cover (408) and projecting radially towards the interior.

11. Dual mass flywheel according to any one of claims 1 to 10, wherein the resilient tongue (25, 125, 225, 325, 425) is integral with the secondary flywheel (3, 103, 303, 403), and wherein the primary flywheel (2, 102, 302, 402) comprises an orifice (32, 132, 332, 446) which faces the said resilient tongue, and can permit the introduction of a tool (33), which makes it possible to thrust the resilient tongue in a direction opposite its unhooked position, such as to space the resilient tongue from the locking lug (29, 129, 329, 429).
